Europäisches Patentamt

(19) European Patent Office

Office européen des brevets

(11) Publication number: **0 156 579**
**B1**

(12) EUROPEAN PATENT SPECIFICATION

(45) Date of publication of patent specification: 26.07.89

(51) Int. Cl.⁴: **B 41 J 29/02**, B 41 J 3/46

(21) Application number: 85301690.5

(22) Date of filing: 12.03.85

(54) Electronic typewriter.

(30) Priority: 20.03.84 IT 5315184 u

(43) Date of publication of application:
02.10.85 Bulletin 85/40

(45) Publication of the grant of the patent:
26.07.89 Bulletin 89/30

(84) Designated Contracting States:
DE FR GB

(56) References cited:
DE-A-2 443 220
FR-A-2 181 219
GB-A-2 105 115
US-A-3 962 608
US-A-4 212 077
US-A-4 378 553
US-A-4 379 336

(73) Proprietor: Ing. C. Olivetti & C., S.p.a.
Via G. Jervis 77
I-10015 Ivrea (IT)

(72) Inventor: Bassetti, Eugenio
Via Don Farinetti, 1/A
I-10010 Cascinette (Turin) (IT)

(74) Representative: Pears, David Ashley et al
REDDIE & GROSE 16 Theobalds Road
London WC1X 8PL (GB)

Courier Press, Leamington Spa, England.

## Description

The present invention relates to an electronic typewriter of the kind set forth in the introductory part of claim I.

Some current typewriters, in order to increase their memory capacity, are provided with units for recording on and reading from flexible magnetic disks, known as floppy disks. Because of their size, such disk drive units are normally mounted on one side of the typewriter, or else they form self-contained units in the true sense, which are connected to the basic machine by means of electric cables.

A typewriter of the kind first mentioned above is known from US-A-4212077 which relates to an electronic typewriter comprising a parallelepipedal casing for the platen and the printing unit and to which are attached a keyboard and a housing for a magnetic store on a front part and a side part of the casing, respectively, and wherein the housing is recessed with respect to the keyboard of the machine. This typewriter is rather cumbersome in view of the space taken by the lateral housing and whose frontal space should be left void to permit the access to the magnetic store.

The Commodore Pet computer (Creative Computing July/August 1978 pages 24-26) includes a casing having an integral keyboard of reduced dimension, a cassette drive and a video display for 40 characters and 25 lines mounted on the top portion of the casing. This computer is devoid of a printing unit and the overall dimension appears to be rather small in view of the miniaturization of the keyboard and the display.

In order to minimize the amount of space taken up by the typewriter and in order to increase the functionality thereof, the present invention is characterised in the manner set forth in Claim 1.

In accordance with a further feature of this invention, the typewriter is characterised as in Claim 2.

The invention will be described in more detail by way of example and with reference to the accompanying drawings in which:

Figure 1 is a perspective view of an electronic typewriter embodying the invention, and

Figure 2 is a partly cut-away plan view of the machine shown in Figure 1.

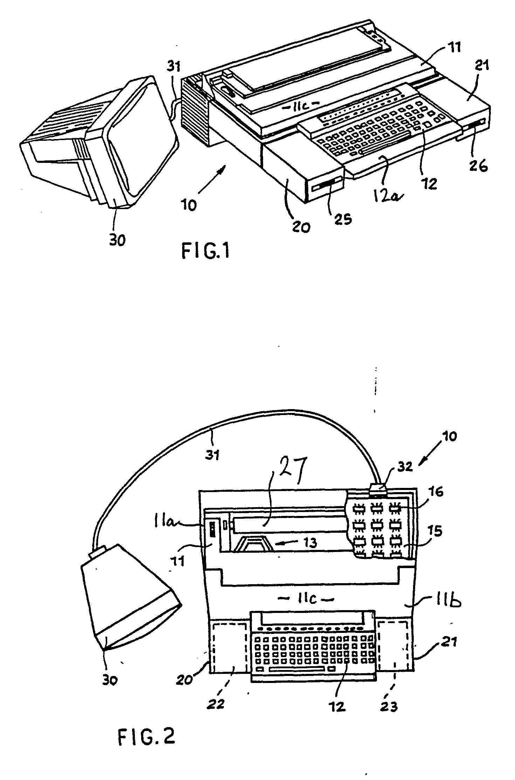

Referring to Figures 1 and 2, the electronic typewriter 10 comprises an external body or casing 11, having a rear part 11a and a front part 11b, and a keyboard 12 which is mounted on the front part 11a of the body 11, for the input of characters and symbols to be printed and instructions to be performed. Disposed within the body 11 is a printing unit 13 of serial type, and an electronic circuit 15 which is connected both to the keyboard 12 and to the printing unit 13. The printing unit 13 is movable transversely in front of a platen 27.

The circuit 15 comprises at least one microprocessor 16 of known type, which is capable of performing all word processing functions, besides the normal typical functions of a typewriter. The circuit 15 also comprises read only and random access memories in which data and working programs are stored.

Disposed on the casing 11 at the sides of the keyboard 12 are two housings 20 and 21 of substantially parallelepipedic shape, into each of which can be fitted a disk drive unit 22, 23 for recording on and reading from flexible magnetic disks.

Although the casing 11 is so shaped as to provide the housings 20 and 21, in its front part it is of a configuration which is substantially aligned with the configuration of the keyboard 12 so as not to cause difficulties to the operator in operating the keys of the keyboard 12.

When they are fitted into the corresponding housings 20 and 21, the units 22 and 23 are connected to the electronic circuit 15 in such a way that the magnetic disks become externally auxilliary memories of the microprocessor 16. The disks are inserted into the corresponding units 22 and 23 by way of frontal slots 25 and 26.

The typewriter 10 further comprises a self-contained video display unit 30 which is independent of the body 11. The VDU 30 is connected to the electronic circuit 15 by means of a flexible electrical cable 31 provided with a connector 32 which the operator can easily plug into a suitable rearward connector of the circuit 15. The operator can dispose the video unit 30 in any position adjacent to the body 11 of the basic machine and orient it as desired according to his or her requirements.

The video unit 30 is controlled by the electronic circuit 15 and is capable of displaying, upon command by the operator, either the data which are keyed in on the keyboard 12 or the data which are stored both in the internal memories and in the external auxilliary memories.

The following features of the typewriter may be seen from the drawings:

the two housings 20, 21 of substantially parallelepipedal shape project frontwardly from the front part 11b of the casing 11 at the left and right sides of the keyboard 12, each housing having a top surface substantially parallel to and a little above a top portion of the keyboard 12, and side surfaces which do not exceed transversely the width of the rear part 11a of the casing II; each housing 20, 21 has a transverse dimension which is a faction of the width of the keyboard 12;

the frontal slots 25, 26 of the two disk units 22, 23 are substantially parallel to a frontal edge of the top surface 12a of the keyboard 12 at both sides of the keyboard;

the casing 11 comprises a substantially planar top surface 11c which is substantially parallel to and little above the top surface of the keyboard 12; and

the top surfaces of the keyboard 12 and casing 11 and the tops of the housings 20, 21 are inclined downwardly from the rear part of the casing toward the said frontal edge.

## Claims

1. An electronic typewriter comprising a casing (11) having a front part (11b) and a rear part (11a); a keyboard (12) mounted on the front part and projecting frontwardly from said front part; a platen (27) and a printing unit (13) mounted in the rear part (11a) of the casing (11), the printing unit being movable transversely in front of the platen; and an electronic circuit (15) mounted in the casing (11), characterized in that:

two housings (20, 21) of substantially parallelipedal shape project frontwardly from the front part (11b) of the casing (11) at the left and right sides of the keyboard (12), each housing having a top surface substantially parallel to and a little above a top portion of the keyboard (12), and side surfaces which do not exceed transversely the width of the rear part (11a) of the casing (11);

each housing (20, 21) having a frontal cavity for accommodating a disk unit (22, 23) for recording on and reading from magnetic disks, each housing having a transverse dimension which is a fraction of the width of the keyboard (12);

each disk unit (22, 23) accommodated in the housings (20, 21) comprising a frontal slot (25, 26) through which the magnetic disks can be inserted into the unit, wherein each disk unit (22, 23), when fitted into the corresponding housing (20, 21), is connected to the electronic circuit (15), and wherein the frontal slots (25, 26) of the two disk units (22, 23) are substantially parallel to a frontal edge of the top surface (12a) of the keyboard (12) at both sides of the keyboard;

in that the casing (11) comprises a substantially planar top surface (11c) which is substantially parallel to and a little above the top surface of the keyboard (12); and

in that the top surfaces of the keyboard (12) and casing (11) and the tops of the housings (20, 21) are inclined downwardly from the rear part of the casing toward the said frontal edge.

2. An electronic typewriter according to claim 1, characterized in that the electronic circuit (15) mounted in the typewriter casing (11) comprises a processing unit (16), means for controlling the functions of the keyboard (12), of the printing unit (13), of the disk units (22, 23), and a video controller; and a connector (32) for a video display unit (30) independent of the casing (11), and to be disposed as desired by an operator independently of the typewriter casing (11) and disk units (22, 23).

## Patentansprüche

1. Elektronische Schreibmaschine mit einem Gehäuse (11), das einen vorderen Teil (11b) und einen hinteren Teil (11a) aufweist; einer Tastatur (12), die auf dem vorderen Teil angeordnet ist und sich von dem vorderen Teil aus nach vorn erstreckt; einer Schreibwalze (27) und einer Druckeinheit (13) im hinteren Teil (11a) des Gehäuses (11), wobei die Druckeinheit quer vor der Schreibwalze verschiebbar ist; und einer elektronischen Schaltung (15) in dem Gehäuse (11), dadurch gekennzeichnet, daß:

zwei Gehäuseteile (20, 21) mit im wesentlichen Parallelepipedform nach vorn vom vorderen Teil (11b) des Gehäuses (11) auf der linken und rechten Seite der Tastatur (12) vorstehen, wobei jeder Gehäuseteil eine obere Oberfläche, die im wesentlichen parallel zu und etwas oberhalb von einem oberen Teil der Tastatur (12) liegt und seitliche Oberflächen aufweist, die die Breite des hinteren Teils (11a) des Gehäuses (11) nicht quer überschreiten;

jeder Gehäuseteil (20, 21) einen vorderen Hohlraum zur Aufnahme einer Platteneinheit (22, 23) zum Aufzeichnen auf und Ablesen von Magnetplatten aufweist, wobei jeder Gehäuseteil eine Querabmessung aufweist, die einen Bruchteil der Breite der Tastatur (12) beträgt;

jede Platteneinheit (22, 23), die in den Gehäuseteilen (20, 21) aufgenommen ist, einen vorderen Schlitz (25, 26) aufweist, durch den die Magnetplatten in die Einheit eingeführt werden können, wobei jede Platteneinheit (22, 23), wenn sie in dem entsprechenden Gehäuseteil (20, 21) eingesetzt ist, mit der elektronischen Schaltung (15) verbunden ist, und wobei die vorderen Schlitze (25, 26) der beiden Platteneinheite (22 23) im wesentlichen parallel zu einer vorderen Kante der oberen Oberfläche (12a) der Tastatur (12) auf beiden Seiten der Tastatur ist;

daß das Gehäuse (11) eine im wesentlichen ebene obere Oberfläche (11c) aufweist, die im wesentlichen parallel zu und etwas oberhalb der oberen Oberfläche der Tastatur (12) liegt; und

daß die oberen Oberflächen der Tastatur (12) und des Gehäuses (11) und die Oberseiten der Gehäuseteile (20, 21) nach unten vom hinteren Teil des Gehäuses nach vorn zu der erwähnten vorderen Kante geneigt sind.

2. Elektronische Schreibmaschine nach Anspruch 1, dadurch gekennzeichnet, daß die elektronische Schaltung (15), die in dem Schreibmaschinengehäuse (11) angeordnet ist, eine Verarbeitungseinheit (16), Mittel zum Steuern der Funktionen der Tastatur (12), der Druckeinheit (13), der Platteneinheiten (22, 23) und eines Videosteuerwerks; und eine Anschlußstelle (32) für eine Videoanzeigeeinheit (30) aufweist, die unabhängig vom Gehäuse (11) ist und von der Bedienungsperson, unabhängig von dem Schreibmaschinengehäuse (11) und den Platteneinheiten (22, 23), nach Wunsch angeordnet werden kann.

## Revendications

1. Machine à écrire électronique comportant un boîtier (11) possédant une partie avant (11b) et une partie arrière (11a); un clavier (12) monté sur la partie avant et faisant saillie vers l'avant à partir de ladite partie avant; un cylindre (27) et une unité d'impression (13) montée dans la partie arrière (11a) du boîtier (11), l'unité d'impression étant déplaçable transversalement devant le cylindre; et un circuit électronique (15) monté dans le boîtier (11), caractérisé en ce que:

deux logements (20, 21) possédant une forme sensiblement parallélépipédique font saillie vers l'avant à partir de la partie avant (11b) du boîtier (11), sur les côtés gauche et droit du clavier (12), chaque logement comportant une surface supérieure sensiblement parallèle à et légèrement au-dessus d'une partie supérieure du clavier (12), et des surfaces latérales, qui ne s'étendent pas, dans le sens transversal, au-delà de l'étendue en largeur de la partie arrière (11a) du boîtier (11);

chaque logement (20, 21) comportant une cavité frontale servant à loger une unité de disques (22, 23) pour réaliser un enregistrement sur des disques magnétiques et une lecture à partir de ces derniers, chaque logement possédant une dimension transversale, égale à une fraction de la largeur du clavier (12);

chaque unité de disques (22, 23) logée dans les logements (20, 21) comprenant une fente frontale (25, 26), par laquelle les disques magnétiques peuvent être insérés dans l'unité, chaque unité de disques (22, 23) étant raccordée, lorsqu'elle est insérée dans le logement correspondant (20, 21), au circuit électronique (15), et les fentes frontales (25, 26) des deux unités de disques (22, 23) étant sensiblement parallèles à un bord avant de la surface supérieure (12a) du clavier (12), des deux côtés de ce dernier; et

en ce que le boîtier (11) comporte une surface supérieure sensiblement plane (11c), et sensiblement parallèle à et légèrement au-dessus de la surface supérieure du clavier (12); et

en ce que les surfaces supérieures du clavier (12) et le boîtier (11) et les surfaces supérieures des logements (20, 21) sont inclinées vers le bas depuis la partie arrière du boîtier en direction dudit bord frontal.

2. Machine à écrire électronique selon la revendication 1, caractérisée en ce que le circuit électronique (15) monté dans le boîtier (11) de la machine à écrire comporte une unité de traitement (16), des moyens pour commander les fonctions du clavier (12), de l'unité d'impression (13) et des unités de disques (22, 23), et un dispositif de commande vidéo; et un connecteur (32) prévu pour une unité d'affichage vidéo (30) indépendante du boîtier (11) et destinée à être disposée comme le souhaite un opérateur, indépendamment du boîtier (11) et des unités de disques (22, 23) de la machine à écrire.

FIG.1

FIG.2